# EUROPEAN PATENT SPECIFICATION

(11) **EP 1 558 917 B1**
(45) Date of publication and mention of the grant of the patent: **10.01.2007**
(21) Application number: 03779246.2
(22) Date of filing: 23.10.2003
(51) Int. Cl.: G01N 21/64, C09K 11/06, C09K 11/08, C23C 4/04

(54) **CHARACTERIZING A MASS DISTRIBUTION PATTERN**
CHARAKTERISIERUNG EINES MASSENVERTEILUNGSMUSTERS
CARACTERISATION D'UNE REPARTITION DE MASSE

(30) Priority: 24.10.2002 US 420808 P
(43) Date of publication of application: 03.08.2005
(73) Proprietor: R & D Intellectual Property, Llc, Sugar Grove, IL 60554 (US)
(72) Inventor: DAVIS, Ronald, V., Geneva, IL 60134 (US); GOVONI, Donald, E., Joliet, IL 60431 (US)
(74) Representative: Schnappauf, Georg
(86) International application number: PCT/US2003/033828
(87) International publication number: WO 2004/038390

(56) References cited:
- US-A- 4 250 382
- US-A- 4 327 120
- US-A- 4 327 155
- US-A- 5 310 604
- US-A- 5 464 986
- US-A- 5 714 387
- US-A- 5 955 002
- T. MATSUZAWA ET AL: "A New Long Phosphorescent Phosphor with High Brightness, SrAI2O4:Eu2+,Dy3+" J. ELECTROCHEM. SOC., vol. 143, no. 8, August 1996 (1996-08), pages 2670-2673, XP002352917

## Description

### Cross-reference to Related Applications

This application claims the benefit of U.S. Provisional Application for Patent Serial No. 60/420,808 filed on October 24, 2002.

### Field of the Invention

The invention relates to characterizing the mass distribution of liquids on solid substrates, and of components within blends of particulate materials, and methods therefor. More particularly the invention relates to the use of phosphorescence to spatially characterize the mass distribution of a liquid deposited on a solid substrate or of components within solid particulate blends.

### Background of the Invention

Many industrial processes involve depositing a liquid onto a solid substrate such as, for example, by coating or spraying. It is generally desirable to characterize the coverage pattern (i.e., mass distribution) of the liquid deposited on the solid surface. If the coverage pattern deviates from a specified pattern, it is often desirable to adjust the coating or spraying conditions so that the liquid is deposited on the solid substrate in conformance with the specifications. When the liquid and the substrate have a suitable visual contrast, as for example, when spraying a pigmented paint onto an even, white surface, the evenness and efficiency of the coverage pattern of the paint can often be determined by visual inspection. When the coverage pattern is determined to be uneven, adjustments to the spraying equipment can be made to compensate for the unevenness. When, however, the liquid and the substrate do not have sufficient contrast to visually detect the spraying pattern, as for example, when spraying or coating a transparent liquid onto a rough, uneven solid substrate, determining the efficiency and evenness of the coverage pattern and adjusting the spraying or coating equipment to optimize the coverage pattern can be difficult.

In many processes, it is important to be able to quantitatively determine the amount of a liquid that is deposited on a solid substrate and the evenness of the deposit over the surface area of the substrate. For example, in calibrating coating equipment for depositing a specified coating thickness onto a substrate, it is generally necessary to quantitatively determine the thickness (lay-down) and completeness of coverage of the substrate. Similarly, in processing of coal for fuel, a variety of additives, such as latex polymers, asphaltene emulsions, and the like, are often sprayed onto the surface of the coal before subjecting the coal to further chemical processing. The uniformity of the deposit of additives on the surface of the coal can affect the performance of the additive.

In one specific example, dust control agents are typically sprayed onto the surface of coal being transported in open rail cars to minimize material loss and dust nuisance problems during transport. An incomplete coverage of the dust control agent on the coal can lead to a dust nuisance problem during transport of the coal. U.S. Patent No. 5,714,387 to Fowee *et al.* describes a method for maximizing the contact of spray dust control products on coal. The method involves incorporating a known concentration of a fluorescent material in the dust control product, spraying the coal with a mixture of water and the dust control product containing the fluorescent material, detecting visible fluorescence on the coal with a ultraviolet (UV) lamp, using the level of fluorescence to determine the extent and uniformity of spray coverage on the coal to identify surface areas of the coal that have been over- or under-prayed, and modifying the spray equipment to ensure maximum contact of the dust control agent over the surface of the coal in response to the over- or under-sprayed surface areas.

The method of Fowee *et al.* requires the use of a UV lamp, which can be inconvenient, and limits the operator's ability to visually inspect the entire surface area of the coal car at once. Fluorescent materials are often sensitive to environmental factors, which result in diminished or quenched fluorescence. Thus differences in the level of fluorescence observed on a surface may not necessarily be due to differences in coverage, but rather to differences in the level of fluorescence quenching of the material. Another limitation of the Fowee *et al.* method is that the fluorescence only occurs while the UV light is irradiating the surface, and ceases substantially immediately upon cessation of irradiation with the UV light. Thus the detecting step is limited to detection only during or under UV irradiation.

In many cases, uniform blends of particulate solid materials are desired, for example, mixtures of sand and gravel for concrete manufacture. There is often a need to characterize the mass distribution of one or more components of the blend, and to adjust the mixing conditions if the blend is not uniform. It can be difficult to determine how uniformly two or more particulate materials are blended. In many cases, the particulate materials may be of similar size and appearance, but of different densities. In such cases, complex chemical analysis of random samples from the blend may be needed to assess the mass distribution of components of the blend.

The document US-A-5310604 (D1) describes a method for monitoring the coating weight, uniformity, defects or markings present in a coating of a composition applied to a substrate, the method comprising *inter alia* the step of providing a substrate with a functional coating of a composition comprising an effective amount of uvescer; cf. e.g. abstract. According to D1, uvescer means a uvescent compound or substance which bears a uvaphore group or radical which on illumination by radiation in the UV portion of the spectrum emits UV radiation; cf. column 3, lines 24 to 34 and 39 to 41. Thus, D1 relates to the use of UV-emitting substances to measure coating uniformity on a substrate.

There is an ongoing need, therefore, for methods of spatially characterizing the mass distribution of a liquid on a solid substrate, or of components in a blend of particulate solids, particularly under ambient lighting conditions, over a large surface area, and/or in real-time. The present invention fulfills this need.

### Summary of the Invention

The present invention provides a method of spatially characterizing the mass distribution of a liquid deposited onto a solid substrate or of components in a blend of particulate solids according to claim 1.

In another embodiment, a first particulate material having a phosphorescent taggant deposited thereon, can be blended with second particulate material. The mass distribution and uniformity of such blends can be assessed by observing the uniformity of the phosphorescent emission from the taggant on the surface of the first particulate. Mixing conditions for the blend can be adjusted until the spacial distribution of the tagged particulate is uniformly distributed within the untagged particulate, either by visual inspection or by means of a detector (e.g., a photographic or photometric detector). The mass distribution and uniformity of blends of three or more particulates can be assessed by tagging multiple components of the blend with different phosphorescent materials, preferably phosphors that emit different wavelengths (i.e., different colors) of light.

A preferred embodiment of the present invention is a method of optimizing the mass distribution coverage pattern of a liquid deposited onto a solid substrate. The method comprises the steps of depositing onto a solid substrate a liquid composition containing a phosphorescent material having an afterglow period of at least about one minute; exposing the phosphorescent material to light; detecting the pattern of phosphorescence on the surface of the solid substrate and characterizing the liquid coverage pattern therefrom; adjusting the depositing conditions when the pattern of phosphorescence on the surface of the solid indicates that the coverage pattern deviates from a specified target coverage pattern; and repeating the depositing, exposing, detecting, and adjusting steps on a fresh substrate until the detected and characterized liquid coverage pattern is judged to be within preselected tolerance specifications relative to the target liquid coverage pattern.

As described above, the light to which the phosphorescent material is exposed has a wavelength suitable for photo-exciting the phosphorescent material. The material is exposed to the light for a time period sufficient to charge the material with sufficient light energy to allow the material to emit light for at least about one minute after the exposing light is extinguished. The phosphorescent material can be exposed to the light before, during, and/or after, the step of depositing the liquid composition onto the substrate.

Another aspect of the present invention is a kit for optimizing the coverage pattern of a liquid deposited onto a solid substrate. The kit comprises a packaged phosphorescent material having an afterglow period of at least about one minute and instructional material and indicia for using the phosphorescent material to optimize a liquid coverage pattern.

Phosphorescent materials useful in the methods and kit of the present invention include phosphorescent inorganic pigments, phosphorescent organic pigments, and phosphorescent organic dyes emitting visible light. The phosphorescent materials are mixed with a liquid material to form a liquid composition containing a phosphorescent material. The liquid material can be a pure liquid substance, a mixture of liquid substances, a solution, a dispersion, a suspension, an emulsion and the like.

The phosphorescent taggant can be deposited on the surface of the solid substrate by any means, preferably by coating or spraying a liquid composition containing the taggant onto the solid substrate. Alternatively, the taggant can be mixed with a particulate substrate and the liquid composition can be added to the mixture, or the taggant can be added to a mixture of the liquid composition and the substrate. The phosphorescent taggant can be exposed to the light before, during and/or after the step of depositing the liquid onto the substrate.

### Detailed Description of Preferred Embodiments

Phosphorescent materials and fluorescent materials share a common property that upon exposure to a specific wavelength of light (stimulating irradiation), the materials emit light of a different wavelength. Phosphorescent materials continue to emit visibly detectable light after the stimulating irradiation is halted. In fact, many phosphorescent materials continue to emit visibly detectable light for several hours after the cessation of the stimulating irradiation. The term "afterglow" refers to the property of a phosphorescent material to continue to emit light after the stimulating irradiation has been halted. In contrast, the emission of light from flourescent materials ceases when the stimulating irradiation is halted and, thus, fluorescent materials exhibit substantially no visibly detectable afterglow.

As used herein, and in the appended claims, the terms "phosphor", "phosphorescence", "phosphorescent material", and grammatical variations thereof, refer to materials having a measurable afterglow period. The terms "fluorescent material", "fluorescence", "fluorescent" and grammatical variations thereof, as used herein refer to materials that do not have a measurable afterglow period. Thus, as used herein, phosphorescent materials are exclusive of fluorescent materials.

The length of time that a phosphorescent material (also referred to herein as a phosphor, for convenience) will continue to emit visibly detectable light is related to the relative quantum states of the ground state and excited state of the material, and to the cumulative amount of light energy (i.e., intensity of the stimulating light integrated over the time of the exposure) to which the phosphor has been exposed by the stimulating light source. A standard measurable "afterglow period" (sometimes referred to as "afterglow time") can be defined as the time period over which the luminance of the phosphorescent light emission decreases to 0.32 millicandela per square meter (mcd/m²) under standardized conditions.

The afterglow period is typically measured by the following or a similar procedure: (1) maintaining about 0.2 g of the phosphor in the dark for about 24 hours at a temperature of about 25 °C and a relative humidity of about 60%; (2) placing the sample in a 10 mm diameter aluminum dish and irradiating the sample for about 30 minutes under a luminescent lamp (about 27 watts) from a distance of about 60 cm directly above the sample (e.g., providing a visible luminous flux (illuminance) of about 1000 lux); (3) extinguishing the lamp; and (4) measuring the luminance (i.e., luminous intensity per unit area) of the phosphorescent light emission from the sample (either continuously or periodically, with a luminance meter or like equipment), and noting the time period required for the luminance to decrease to about 0.32 mcd/m² (i.e., the limit of detection of light by the human eye). Afterglow times are typically reported on product data sheets by phosphor manufacturers.

As used herein and in the appended claims, the term "spatially characterizing" and grammatical variations thereof, in reference to the coverage pattern or mass distribution of a liquid on a solid substrate, the distribution of a phosphorescent taggant on a solid substrate, or the mass distribution of components of a blend of tagged and non-tagged particulate solids, refers to determinations such as measurement of the amount of a liquid substance deposited on a given surface area of a solid substrate (e.g., coating lay-down), mapping of the amount of the liquid deposit at different areas on the surface of the substrate, three-dimensional mapping of the amount of the liquid deposit on the surface of the substrate within a solid matrix (e.g., three-dimensional distribution in a particulate solid material), determination of the total amount of a liquid material that has been deposited on a sample of a solid substrate from a process stream, determination of the amount or uniformity of a deposit of phosphorescent taggant on a solid substrate, assessment of the uniformity of a blend of solid substrates, and the like.

When the liquid composition contains a known concentration of a phosphorescent taggant, the measurement of phosphorescence from a deposit of the liquid composition can be used to determine the total quantity of taggant present in the sample. The amount of liquid deposit present on the surface of the sample can then be calculated from the known concentration of the taggant in the liquid composition and the quantity of the taggant determined by phosphorescence measurement. Even when the concentration of the taggant in the liquid composition is not known, relative phosphorescence measurements of different samples, or of different portions of the surface of a sample can still be used to characterize the mass coverage pattern of the liquid deposit on the surface of the substrate. For example, evenness and completeness of distribution of the liquid composition on the substrate can be characterized by measuring or visually inspecting the pattern of phosphorescence on the sample surface. Variations in phosphorescence intensity on the surface indicate variations in liquid deposit on the surface.

Similarly, when two or more particulate solids including at least one phosphorescent taggant are blended together, the uniformity of the blend can be assessed by observing the spacial distribution of the phosphorescent emission from the blend.

The present invention provides a method of spatially characterizing the mass distribution of a liquid composition deposited onto a solid substrate or of components within a blend of particulate materials. The method comprises the steps of: depositing onto a solid substrate a phosphorescent material having an afterglow period of at least about one minute, in the presence of a liquid composition; exposing the phosphorescent material to light having a wavelength suitable for photo-exciting the phosphorescent material for a time period sufficient to charge the material with sufficient light energy to allow the material to emit light for at least about one minute after the exposing light is extinguished; and detecting the pattern of phosphorescence on the surface of the solid substrate. When the phosphorescent material is deposited as a component of the liquid composition (i.e., dispersed in the liquid composition), the mass distribution of the liquid that has been deposited on the solid substrate can be assessed from the detected pattern of phosphorescence on the surface of the substrate.

When a particulate substrate having a phosphorescent taggant deposited on its surface is blended with another particulate material, the mass distribution of the tagged substrate within the blend can be assessed by detecting the phosphorescence emitted from the tagged substrate. Mixing conditions can be altered to achieve the desired degree of uniformity in the blend. When the phosphorescent taggant is exposed to light before the particulate materials are blended, the uniformity of the mixing process can be observed in real time by observing the phosphorescence while the particulate materials are being blended.

In another method aspect, the present invention provides a method of optimizing the coverage pattern (i.e., mass distribution) of a liquid deposited onto a solid substrate. The method comprises the steps of: depositing onto a solid substrate a liquid composition containing a phosphorescent material having an afterglow period of at least about one minute; exposing the phosphorescent material to light having a wavelength suitable for photo-exciting the phosphorescent material for a time period sufficient to charge the material with sufficient light energy to allow the material to emit light for at least about one minute after the exposing light is extinguished; detecting the pattern of phosphorescence on the surface of the solid substrate and characterizing the liquid mass distribution coverage pattern therefrom; adjusting the depositing conditions when the pattern of phosphorescence on the surface of the solid support indicates that the coverage pattern deviates from a specified target coverage pattern; and repeating the depositing, exposing, detecting, and adjusting steps on a fresh substrate until the detected and characterized liquid mass distribution coverage pattern is within the tolerance specifications for the target coverage pattern.

A specified target coverage pattern is preselected based on the coverage requirements for depositing the particular liquid composition onto the particular solid substrate. The preselected target liquid mass distribution coverage pattern will generally depend heavily on the type of process involved (e.g., coating versus spraying), the type of liquid to be deposited, the type of substrate, the purpose of the deposited liquid, and the like, as is well known to those of ordinary skill in the chemical processing arts. When an observed coverage pattern is within predefined tolerances when compared to a target coverage pattern, the distribution of the liquid on the solid substrate has been optimized.

In yet another aspect, the present invention provides a method for characterizing the mass distribution of components within a blend of particulate materials. Particles coated with a substantially uniform distribution of a phosphorescent taggant (i.e., tagged-particulates) as described herein can be mixed or blended with another particulate material and the distribution of the tagged-particulate within the blend can be determined. The uniformity of mixing the tagged particulate with the other (non-tagged) particulate material can be assessed by collecting samples of the blend, and then characterizing the mass distribution of the taggant in the blend by the methods of the present invention. If the distribution of the taggant in the blend is substantially uniform, then the mixing of the particulate materials is deemed uniform. If the mass distribution of the taggant in the blend is not substantially uniform, then the mixing is deemed non-uniform. When mixing is non-uniform, the mixing equipment and mixing parameters can be adjusted to improve the uniformity of the blend.

The mass distribution and uniformity of the blend can be assessed by exposing the phosphorescent taggant to light of a suitable wavelength and for a sufficient time to excite the phosphor, and the pattern of phosphorescence can then be detected as described above. The phosphorescent taggant can be suspended in a liquid adhesive or binder and uniformly coated onto a first particulate substrate. Upon drying, the so-tagged particulate material can be blended with another particulate material, which can, itself, be tagged or can be non-tagged. The uniformity of the distribution of the tagged particulate within the blend can be assessed by detecting the phosphorescence emitted from the taggant(s) after exposure to a suitable excitation light source.

The mass distribution and uniformity of blends of two or more particulates can be assessed by tagging multiple components of the blend with different phosphorescent materials, preferably phosphors that emit different wavelengths (i.e., different colors) of light.

For example, sand and gravel are commonly blended, such as for concrete preparation. It is often desirable to know how uniformly the differently sized sand and gravel particles are mixed. Bulk sand can be substantially uniformly coated with a liquid composition containing a phosphorescent taggant, as described herein, and the so-formed tagged sand can then be blended with gravel in a suitable mixer. The mass distribution of the sand and gravel can then be characterized by taking samples of the blend and observing the pattern of phosphorescence emitted from the taggant. If the phosphorescent taggant is not substantially uniformly distributed in the sand and gravel mixture, the mixing conditions can be altered to achieve a more uniform blend. Without a taggant, it is difficult to determine how uniformly sand and gravel are mixed.

Alternatively, the gravel can be coated with the phosphorescent taggant and mixed with non-tagged sand, or both the sand and the gravel can be coated with a taggant (preferably a different taggant for each). The pattern of phosphorescence emitted from the phosphor-tagged particulate materials is then detected by the methods described herein and the mass distribution of the particulate materials can be characterized therefrom. Of course, one of ordinary skill in the art will recognize that any number of different particulate materials can be appropriately tagged and mixed, and the mixing uniformity determined by the methods of the present invention.

The present invention also provides a kit for optimizing the mass distribution coverage pattern of a liquid material deposited onto a solid substrate. The kit comprises a phosphorescent material in packaged form and instructional indicia for using the phosphorescent material to optimize coverage of a liquid material deposited onto a solid substrate. Any sealable container can be used for packaging the phosphorescent material. Examples of suitable containers include, without limitation, bottles, jars, vials, ampules, cans, pouches, sachets, and the like. The containers can be composed of any chemically inert material suitable for packaging the particular phosphorescent material included in the kit. Generally, glass and plastic containers will be suitable for most materials. The amount of phosphorescent material can be provided in bulk or in pre-measured portions sufficient for use in the methods of this invention. The phosphorescent material can be provided as a powder, as a liquid, or in semi-liquid form, such as a paste, gel or the like. For example, the phosphorescent material can be premixed with all or a portion of the liquid material whose coverage pattern is to be characterized and provided as a packaged liquid phosphor-containing composition.

The instructional indicia preferably include detailed instructions for utilizing the phosphorescent materials to optimize the coverage of a liquid material deposited onto a solid substrate. Most preferably, the instructional indicia include instructions to optimize coverage of a liquid material deposited onto a solid substrate by the methods of the present invention. The instructional indicia can also include, for example, information about the chemical nature of the phosphorescent material, safety information, disposal information, and the like. The instructional indicia can be in the form of a label, container, or separate pamphlet, or brochure, and the like.

Liquid composition useful in the methods and kits of the present invention, include any liquid chemical process component or additive to which a phosphorescent material can be added. The term "liquid chemical process component" as used herein includes any liquid material that is intended to be deposited on the surface of a solid substrate without visibly imparting color to the surface of the substrate. The liquid material can be, for example, a substantially pure liquid chemical substance, a mixture of liquid chemical substances, a solution, a dispersion, an emulsion and like vehicles. The phosphorescent material is added solely for the purpose of visualizing and detecting the coverage pattern of the deposited liquid. Generally, the phosphorescent material will not be a permanent component of the liquid chemical process stream and the amount employed will not affect the chemical process stream if phosphor should remain therein.

Specific, non-limiting examples of liquid chemical process components comprising solid materials in a liquid vehicle system, include:
(a) liquid binders used in briquetting, extrusion, pelletization, and like processes, such as solutions or suspensions of polysaccharides (e.g, guar, carrageenan, alginates, carboxymethyl cellulose, and the like), synthetic polymers (e.g., polyacrylates, polyvinyl alcohol, and the like), proteins, poly(amino acids), and polypeptides (e.g., casein, polyglutamic acid, and the like), clays (e.g., sodium bentonite, calcium montmorrillonite, and the like), lignins (e.g., lignosulfonate salts, and the like);
(b) liquid biocides used in kaolin processing, pulp and paper processing, and the like (e.g., bleaches, glutaraldehyde, isothiazolinones, and the like);
(c) flocculants and coagulants used in ore processing, solid/liquid separation processes, and the like, (e.g., polyacrylamides, polyacrylates, poly(diallyldimethylammonium chloride), and the like);
(d) collectors and flotation aids used in solid/solid separation processes (e.g., alcohol-based frothers, methylisobutyl carbinol (MIBC), polypropylene glycol, fuel oil, and the like);
(e) reagents for coal-based fuel manufacture (e.g., latex polymers, asphalt emulsions, tall oils, and the like);
(f) pulp and paper processing chemicals (e.g., bleaches, sizing, caustic, and the like);
(g) metal production and processing additives (e.g., rolling oils, lubricants, and the like);
(h) dust control agents (e.g., latex polymers, water, and the like);
(i) dewatering agents (e.g., surfactants, soaps, and the like);
(j) freeze protection agents (e.g., glycols, salt solutions, and the like);
(k) adhesives (e.g., for fiber board, particle board manufacture, glove dipping, carpet, and the like);
(l) binders (e.g., for gypsum and other additives in wallboard and drywall manufacture, and the like);
(m) sealers, varnishes, and rust-proofing agents; and
(n) any other liquid non-pigmented composition which is coated, sprayed, or otherwise deposited onto a solid substrate in an industrial process.

A liquid composition containing a phosphorescent material can be deposited on the surface of the solid substrate by any convenient means. For example, the liquid composition can be sprayed onto the solid substrate through a pressure nozzle or sonic nozzle. Suitable types of pressure nozzles include, for example, hollow cone nozzles, solid cone nozzles, fan nozzles, and the like. Suitable types of sonic nozzles include, without limitation, spinning disc atomizers, spinning cup atomizers, and the like. Spray nozzles and rotary atomizers are described, for example, in *Perry's Chemical Engineer's Handbook,* 6th Edition, Robert H. Perry and Don W. Green. (Eds.), section 18, pp. 50-53, McGraw-Hill Book Company, New York (1984).

Alternatively, the liquid phosphor-containing composition can be coated onto the solid substrate in a conventional coating process. Non-limiting examples of coating equipment suitable for depositing a liquid composition onto a solid substrate are described in Briston, *Plastics Films,* Second Edition, pp. 282-290, Longman Scientific and Technical, Essex, England (1983).

For example, the liquid composition can be coated onto the surface of a solid substrate such as a polymeric web, a polymeric film, a paper, a fabric, and the like. The composition can be coated onto the substrate using known coating techniques, including but not limited to:
blade coating equipment such as a rigid knife coater, a flexible blade coater, a smoothing bar coater, and an air-jet blade coater;
roll coating equipment such as a reverse roll coater, a nip roll coater, a gravure coater, and a calender coater;
extrusion coating equipment such as a slide hopper coater, and a curtain coater;
brush coating equipment; and the like.

The liquid composition may, alternatively, be coated onto the surface of particulate solid substrate, such as kaolin clay, coal feed stock, and the like, by forming a slurry of the liquid composition and the solid substrates, optionally in an additional liquid medium.

Phosphorescent taggants that are useful in the methods of the present invention can be classified as photo-phosphorescent materials, i.e., phosphorescent materials that are excited by light. Phosphorescent materials suitable for use in the methods of the present invention have an afterglow period of at least about one minute, preferably at least about 30 minutes, more preferably at least about one hour. In a particularly preferred embodiment, the phosphorescent material has an afterglow period of several hours (i.e., a long-afterglow phosphor). The use of long-afterglow phosphors facilitates the quantitative determination of light emission from multiple samples after only one light-exposure charging time period. The light emission from long-afterglow phosphors tend to change intensity relatively slowly compared with phosphorescent materials having afterglow periods of less than about one hour.

Phosphorescent materials are well known in the chemical arts. Phosphors can be inorganic or organic pigments (i.e., materials that are insoluble in water or other solvents), or organic dyes (i.e., materials that are soluble in water or other solvents). Generally, phosphorescent materials emit light of longer wavelength than the wavelength of the light used to excite or charge the phosphor, a phenomenon known as Stokes Law, however, there are some "anti-Stokes" phosphors, which emit light of a shorter wavelength than the excitation wavelength. A useful discussion of phosphorescent pigments is found in *The Pigment Handbook,* (T. C. Patton, Ed.) Vol. 1, pp. 911-914 and Vol. 3, p. 226, John Wiley & Sons, Inc., New York (1973).

Inorganic phosphorescent pigments suitable for use in the methods of the present invention include, without limitation, metal doped inorganic materials such as alkaline earth metal and transition metal sulfides (e.g., calcium sulfide, strontium sulfide, zinc sulfide, cadmium sulfide, and the like), alkaline earth metal silicates (e.g., strontium silicates), alkaline earth metal aluminates (e.g. strontium aluminate), transition metal oxides (e.g., yttrium oxide), and transition metal mixed oxide/sulfides (e.g., Y₂O₂S), and the like, which are doped with various heavy-metal and/or lanthanide metals (i.e, dopants or activators) such as, for example, copper, bismuth, gold, silver, europium, dysprosium, neodymium, holmium, and the like. The dopant is typically present in the inorganic material in a concentration ranging from a few parts per million (ppm) by weight up to about two percent by weight. Phosphors are commonly designated by the chemical formula of the principal inorganic material in the phosphor followed by the chemical symbol for the doping element, separated by a colon (e.g., ZnS:Cu, SrAlO₄:Eu, Y₂O₃:Eu, and the like). Often the dopant affects the emission wavelength of the phosphor. Many commercially useful phosphorescent pigments consist of mixtures of the aforementioned inorganic materials doped with one of more metal activators. A particularly preferred phosphor is a strontium aluminate doped with europium, available from Global Trade Alliance, Inc., Scottsdale, AZ, as a powder, and having a mean particle size of about 50 microns and a reported afterglow period of about 2000 hours.

Useful phosphorescent inorganic pigments are available from a variety of commercial sources. The manufacturers typically report the excitation wavelength and/or light source required to excite the phosphor, the time period and intensity for optimum excitation, and the wavelength and or color of the emitted light, as well as the afterglow time period for the material. For example, SrAlO₄-based turquoise and yellow green phosphors having afterglow periods of up to about 100 hours, Y₂O₂S:Eu-based orange phosphors having an afterglow period of up to about 10 hours, ZnS:Cu-based yellow-green phosphors having afterglow periods of up to about 3 hours, as well as a number of other useful phosphors, are available from Risk Reactor, Huntington Beach, California. Phosphors based on strontium aluminate doped with europium and/or dysprosium, having emission colors of yellow-green and blue, with afterglow periods of up to about 12 hours, are available from Stanford Materials, Aliso Viejo, California.

Particularly preferred phosphors are alkaline earth aluminates doped with a metallic, lanthionide element such as europium, dysprosium, neodymium, or holmium. Preferably the alkaline earth aluminate is strontium aluminate, calcium aluminate, barium aluminate or a combination thereof The preferred alkaline earth aluminates are doped with a sufficient amount of europium, dysprosium, neodymium, holmium, or a combination thereof to provide a phosphorescent material having an afterglow period of at least about one minute.

Phosphorescent organic dyes can also be utilized in the methods of the present invention, such as *fac*-tris(2-phenypyridine) iridium [Ir(ppy)₃] or 2,3,7,8,12,13,17, 18-octaethyl-21H,23H-porphyrin platinum (II) [PtOEP], and the like. Preferably the phosphorescent material is an inorganic phosphorescent pigment. Inorganic phosphorescent pigments offer an advantage of chemical stability under a variety of high and low pH, and high temperature conditions in comparison with organic-based materials.

A phosphorescent material is preferably selected based on the chemical properties of the liquid to which it will be added. For example, aqueous liquid materials will preferably include a water insoluble, hydrolytically stable phosphor. For example, zinc sulfides are very insoluble in water and quite hydrolytically stable, whereas calcium and strontium sulfides react with water and acids resulting in a loss of luminant properties. One of ordinary skill in the art can choose a phosphorescent material that is stable in a given liquid composition under given processing conditions.

Typically, high intensity incandescent white light sources, such as tungsten lamps, halogen lamps, and the like are used to excite the phosphors. Alternatively, fluorescent light sources can be utilized. In some instances UV light may be used to excite phosphors as well. In such cases, the phosphors differ dramatically from fluorescent materials, in that the phosphorescent materials emit visible light for long periods after the excitation light source has been removed, whereas in a fluorescent material, the visible light is emitted only so long as the excitation source is present, and ceases substantially immediately upon removal of the excitation source. In the method of this invention, the step of exposing the phosphorescent material to the light can be performed before, during, and/or after the step of depositing the liquid phosphor-containing composition onto the solid substrate.

Long-afterglow phosphors are particularly useful in embodiments wherein the phosphor is exposed to light prior to depositing the liquid composition containing the charged phosphor onto the solid substrate. In such an embodiment, for example, when spraying a liquid coal processing additive containing a charged phosphor onto coal in a continuous processing stream, the entire spraying and deposition process can be visualized in a low ambient light environment, due to the phosphorescent light emission from the phosphor contained in the liquid additive. The spray pattern can be observed visually, in,real-time, as can the evenness of distribution of the liquid additive on the surface of the coal (coverage pattern). Since the spray pattern and coverage pattern can be observed directly, in-process adjustments to the spray nozzle arrangement, spray pressure, and other process parameters can be made and the effect of the changes on the coverage pattern can be directly observed. Thus, the effective coverage pattern can be rapidly optimized in a very short time frame. Once the equipment has been adjusted to optimize the coverage pattern to a desired specification, the process can be operated continuously without any phosphorescent material being present in the liquid additive.

Since phosphorescent materials can typically go through thousands of charge and emission cycles, samples taken from a process stream can be stored and analyzed at a later time, repeatedly if desired. The stored samples need only be exposed to a charging light source of the appropriate wavelength for charging the particular phosphor used, and then the light emission intensity can be determined quantitatively using, for example, a photometer, photographic, or digital imaging detection technique, as are well known in the analytical arts.

When photographic detection is used, a photographic film is exposed to the light being emitted from the sample for an exposure period sufficient to capture an image of the sample on the photographic film. The exposed film is then developed to produce a photographic image of the sample. The optical density of various portions of the image can be measured using a densitometer to quantitatively assess the evenness of liquid coverage on the surface. Alternatively, the same film can be exposed to a graded calibration image of phosphorescent emissions from known quantities of phosphor charged with the same amount of light energy as the sample. A comparison of the optical density of the sample image to the graded calibration image can allow a quantitative determination of the amount of phosphorescent material deposited on the surface of the substrate. When the concentration of phosphor in the liquid composition is known, the amount of liquid that has been deposited on the surface can be calculated from the measured quantity of phosphor on the surface, as can the spacial mass distribution of the liquid on the surface.

In another photometric detection method, an image of the phosphorescence can be collected with a digital imaging system such as a charge-coupled device (CCD). After image capture through a suitable optical array, such as a camera lense system, the image can be digitally characterized for factors such as uniformity and image brightness, color, and the like. This digitally-derived information can be related to the concentration and mass distribution of the liquid on the solid surface in a manner analogous to that described above with regard to photographic detection.

The following non-limiting examples are provided to further illustrate the invention.

### EXAMPLE 1. Laboratory-Scale Characterization of a Deposit of a Liquid Latex on a Coal Substrate.

About 2 grams of europium-doped strontium aluminate phosphorescent pigment (strontium aluminate doped with europium having a reported afterglow period of about 2000 hours, available from Global Trade Alliance, Inc., Scottsdale, AZ) was suspended in about 4 grams aqueous styrene-butadiene latex polymer (50% active polymer solids in water, pH 6, Dow Chemical Co., Midland, MI). The resulting phosphor-containing liquid latex composition, in the form of a slurry, was continually stirred with a magnetic stirrer. About 3 grams of the phosphor-latex slurry was then added dropwise onto about 1000 grams of coal feedstock with continuous stirring employing a KITCHEN-AID® mixer fitted with a wire whip attachment. The coal feed stock was high volatile bituminous coal from the Illinois basin (as-received moisture content of about 12% by weight), previously crushed and sized to a topsize of about 2 cm. Stirring of the mixture of coal and phosphor-containing liquid latex composition was continued about 10 minutes after the addition of the phosphor-latex slurry was completed. The resulting liquid-coated coal had a calculated phosphor concentration of about 1 gram of phosphor per kilogram of coal (i.e., about 0.1 % by weight, or 1000 ppm).

It is known that under the mixing conditions described above, the latex polymer does not evenly distribute onto the surface of coal. A sample (about 30 grams) of the resulting phosphor and latex-coated coal was exposed to light by placing the sample in a three inch diameter aluminum pan and irradiating the sample with an incandescent lamp (60-watt, frosted bulb) positioned at a distance of about 5 inches directly above the sample, for an irradiation time period of about one minute. The liquid coverage pattern of the phosphor-containing liquid latex composition on the coal surface was visually characterized by darkening the room and visually observing phosphorescent afterglow pattern. Phosphorescence was observed immediately after the irradiation has halted and was readily visible for at least one minute thereafter. A distinctly non-uniform phosphorescence pattern was observed on the surface of the coal particles, indicating that the phosphor remained associated with the non-uniformly distributed latex polymer under these mixing conditions. A similar phosphorescence was observed when a long wavelength UV light was substituted for the incandescent light.

For comparison, the above procedure was repeated, except that about 1 gram of the same phosphorescent pigment suspended in about 1 gram of water was mixed with about 1000 grams of coal feedstock as described above, but without addition of the liquid latex polymer. The amounts of pigment and water used were identical to those used in the latex coatings described above. After this mixture was mechanically stirred for about 10 minutes, a sample (about 30 grams) of the resulting directly-coated, coal-phosphor mixture was exposed to light and the phosphorescent pattern was visually observed, as described above. The pattern of phosphorescence on the coal surface was substantially uniform, in contrast to the latex example, thus confirming that the phosphorescent pigment remains associated with the liquid additive (i.e., the latex polymer).

In order to further characterize the liquid coverage patterns on the coal surfaces, digital images of the irradiated coal samples were also taken, which provided a permanent record of the phosphorescent patterns on the coal surfaces.

### EXAMPLE 2. Production-Scale Characterization of a Deposit of a Liquid Latex on a Coal Substrate.

About 25 pounds of the strontium aluminate phosphor used in Example 1 were added with stirring to about 30 gallons of a 10 % solids aqueous emulsion of the same latex polymer used in Example 1 to afford a 10% by weight slurry of the phosphor, contained in a 55-gallon capacity drum. The bulk of the phosphor-latex slurry was then mechanically stirred continuously (propeller-blade, electric chemical mixer) as the phosphor-latex slurry was pumped to sprayer heads positioned for spraying onto a coal feedstock moving on conveyer belts through a process stream, as the coal feedstock cascaded from one belt onto another belt. Multiple spray heads (fan type) were arranged at the end of a conveyor belt so that the phosphor-latex spray would contact multiple surfaces of the coal cascade as it dropped from one belt onto another belt. The phosphor-latex slurry was sprayed onto the coal at a rate of about 12 gallons per minute for a total of about 2.5 minutes at a commercial coal-based fuel processing plant. The coal feed rate was about 325 tons per hour; thus, the nominal concentration of phosphor on the coal was calculated to be about 2 pounds of phosphor per ton of coal.

A sample (about 10 pounds) of the phosphor and latex-coated coal was collected at the end of the coal process stream about 2 minutes after the spraying of the slurry was commenced. The sample was placed in a plastic bag for later characterization. Excess air was carefully removed before the bag was sealed and care was taken in transport to avoid any further mixing of the coal sample.

About one day after the sample was collected, approximately 30 grams of the coal sample collected from the process stream above was irradiated with a long wavelength UV light source positioned about 5 inches directly above the sample for a period of about 30 seconds. A distinct, uniform phosphorescence pattern was observed on the coal surface for at least one minute after the excitation lamp was turned off and the sample was visually inspected in a darkened room to characterize the liquid coverage pattern. A digital image of the phosphorescence pattern on the coal surface was taken as a permanent record of the observed liquid coverage pattern.

About one month after the sample was collected, the same 30 gram sample was irradiated with an incandescent lamp (60-watt, frosted bulb) positioned at a distance of about 5 inches directly above the sample, for an irradiation time period of about one minute. The liquid coverage pattern of the phosphor-containing liquid latex composition on the coal surface was visually characterized by darkening the room and visually observing phosphorescent afterglow pattern. Phosphorescence was observed immediately after the irradiation has halted and was readily visible for at least one minute thereafter. The same uniform pattern of phosphorescence was observed at this time as was observed after UV irradiation of the sample one day after the sample was collected.

### EXAMPLE 3. Assessment of Uniformity of a Sand and Gravel Blend.

About 4 grams of an ethylene/vinyl acetate copolymer adhesive (Air Products ATRFLEX® 315) was mixed with about 4 grams of distilled water, and the resulting emulsion was thoroughly mixed with about 1 kilogram of medium grain sand (about 90 percent of the sand having a particle size of greater than about 250 microns and about 100 percent having a particle size of less than about 600 microns). About 2 grams of the strontium aluminate phosphor used in Example 1 was added to the sand/adhesive mixture and blended for about 10 minutes. The resulting mixture was then dried at about 100°C in a vacuum oven (about 1 Torr absolute pressure) to afford a phosphor-tagged sand.

Approximately equal weights (about 500 grams each) of tagged sand and non-tagged gravel (particle size of less than 1.25 cm) were blended in a KITCHEN-AID® mixer and samples of the resultant blend were irradiated with an excitation light source and the mass distribution of the sand within the blend was readily apparent upon visual observation of the phosphorescence emitted from the taggant in the absence of an external light source. The spacial distribution of the tagged sand and non-tagged gravel particles was readily apparent from the observed phosphorescence pattern.

### EXAMPLE 4. Assessment of Uniformity of a Sand and Gravel Blend.

About 4 grams of an ethylene/vinyl acetate copolymer adhesive (Air Products AIRFLEX® 315) was mixed with about 4 grams of distilled water, and the resulting emulsion was thoroughly mixed with about 1 kilogram of general purpose gravel (particle size of less than 1.25 cm). About 2 grams of the strontium aluminate phosphor used in Example 1 was added to the gravel/adhesive mixture and blended for about 10 minutes. The resulting mixture was then dried at about 100 °C in a vacuum oven (about 1 Torr absolute pressure) to afford a phosphor-tagged gravel.

Approximately equal weights (about 500 grams each) of tagged gravel and non-tagged medium grain sand (about 90 percent of the sand having a particle size of greater than about 250 microns and about 100 percent having a particle size of less than about 600 microns) were blended in a KITCHEN-AID® mixer and samples fo the resultant blend were irradiated with an excitation light source and the mass distribution of the gravel within the blend was readily apparent upon visual inspection in the absence of an external light source due to the phosphorescent emission from the taggant. The spacial distribution of the tagged gravel and non-tagged sand particles was readily apparent.

### EXAMPLE 5. Alternative Preparation of Phosphor-Tagged Sand.

About 4 grams of an adhesive (principally composed of acrylate copolymers, cellulose acetate butyrate, neopentyl glycol-trimellitic anhydride-adipic acid copolymer, and dibutyl phthalate dissolved in ethyl acetate, butyl acetate and isopropanol) was mixed with about 1 gram of ethyl acetate, and the resulting solution was thoroughly mixed with about 2 grams of the strontium aluminate phosphor used in Example 1 to form a slurry of the phosphorescent taggant in the adhesive solution. The slurry was then added to about 1 kilogram of medium grain sand and mixed in a KITCHEN-AID® mixer for about 10 minutes. The resulting mixture was then dried at about 100 °C in a vacuum oven (about 1 Torr absolute pressure) to afford a phosphor-tagged sand suitable for use in the methods of the present invention.

### EXAMPLE 6. Alternative Preparation of Phosphor-Tagged Gravel.

About 4 grams of the adhesive of Example 5 was mixed with about 1 gram of ethyl acetate, and the resulting solution was thoroughly mixed with about 2 grams of the strontium aluminate phosphor used in Example 1 to form a slurry of the phosphorescent taggant in the adhesive solution. The slurry was then added to about 1 kilogram of general purpose and mixed in a KITCHEN-AID® mixer for about 6 minutes. The resulting mixture was then dried at about 100 °C in a vacuum oven (about 1 Torr absolute pressure) to afford a phosphor-tagged gravel suitable for use in the methods of the present invention.

### EXAMPLE 7. Preparation of Phosphor-Tagged Salt.

About 4 grams of the adhesive of Example 5 was mixed with about 1 gram of ethyl acetate, and the resulting solution was thoroughly mixed with about 2 grams of the strontium aluminate phosphor used in Example 1 to form a slurry of the phosphorescent taggant in the adhesive solution. The slurry was then added to about 1 kilogram of granular sodium chloride and mixed in a KITCHEN-AID® mixer for about 6 minutes. The resulting mixture was then dried at about 100 °C in a vacuum oven (about 1 Torr absolute pressure) to afford a phosphor-tagged salt suitable for use in the methods of the present invention.

As is readily apparent from the present description and examples, the characterization of the mass distribution of a liquid deposit on a solid surface or of components in a solid-solid blend can be made either on-site, such as during depositing of the liquid coating or during the blending process, or off-site, such as in a laboratory or quality control area, after the liquid has been deposited on the solid substrate or the particulate solids have been blended.

The methods of the present invention, for characterizing the liquid mass distribution coverage pattern, are useful in a number of industrial and chemical processes, including, without limitation, to determine the extent of mixing of an additive with a solid substrate, which can be used to adjust the parameters on the mixing equipment to improve the solid-liquid mixing efficiency if desired; to dynamically evaluate solid-liquid mixing phenomena in an operational process stream; to determine the spatial distribution of a deposited liquid in a process stream or solid matrix; to measure the transit time of a solid material in a solid process stream; and the like.

The methods of characterizing the mass distribution of components in a particulate solid blend, as described herein, are useful, for example, to determine the extent and uniformity of mixing of two or more particulate solid materials, which can be used to adjust the parameters on the mixing equipment to improve the blend uniformity if desired; to dynamically evaluate solid-solid mixing phenomena in an operational process stream; to determine the spatial mass distribution of a tagged particulate material in a solid blending process stream; to measure the transit time of a solid material in a solid process stream; and the like.

## Claims

1. A method of spatially characterizing the mass distribution of a liquid deposited onto a solid substrate, or of components within a blend of particulate materials, the method comprising the steps of:
depositing onto a solid substrate a phosphorescent material in the presence of, or admixed with, a liquid composition, the phosphorescent material emitting visible light and having an afterglow period of at least one minute;
exposing the phosphorescent material to light having a wavelength suitable for photo-exciting the phosphorescent material for a time period sufficient to charge the material with sufficient light energy to allow the material to emit visible light for at least about one minute after the exposing light is extinguished; and
detecting a pattern of visible phosphorescence on the surface of the solid substrate and characterizing the liquid coverage pattern therefrom.

2. The method of claim 1 wherein the mass distribution of the liquid deposited onto the solid substrate is optimized by further including the steps of:
adjusting the depositing conditions when the pattern of phosphorescence on the surface of the solid substrate indicates that the coverage pattern deviates from a preselected target coverage pattern; and
repeating the depositing, exposing, detecting, and adjusting steps on a fresh substrate until the detected and **characterized** liquid coverage pattern is within predefined tolerance specifications relative to the target liquid coverage pattern.

3. The method of claim 1 wherein the solid substrate comprises a blend of particulate materials comprising at least one particulate material having the phosphorescent material deposited thereon to provide a phosphor-tagged component admixed with at least one other particulate material, wherein the mass distribution of phosphor-tagged particulate material within the blend is **characterized** from the detected pattern of phosphorescence.

4. The method of any one of claims 1 through 3 wherein the liquid composition comprises a latex polymer.

5. The method of claim 4, wherein the latex polymer is a styrene-butadiene latex polymer.

6. The method of any one of claims 1 through 5 wherein the liquid composition comprises a process additive selected from the group consisting of a liquid binder, a liquid biocide, a flocculant or coagulant, a collector or flotation aid; a reagent for coal-based fuel manufacture, a pulp and paper processing chemical, a metal production and processing additive, a dust control agent, a dewatering agent, a freeze protection agent, a sealer, a varnish, a rust-proofing agent, an adhesive, a binder for gypsum, and a combination thereof.

7. The method of any one of claims 1 through 6 wherein the solid substrate is a material selected from the group consisting of coal, clay, mineral ores, paper pulp, gypsum, metal, cellulose, and carpet.

8. The method of any one of claims 1, 2 and 4 through 7 wherein the step of detecting the pattern of phosphorescence is performed during the step of depositing the phosphorescent material onto the solid substrate.

9. The method of any one of claims 1 through 8 wherein the step of detecting the pattern of phosphorescence is performed by visually inspecting the surface of the solid substrate or is performed quantitatively.

10. The method of any one of claims 1 through 9 wherein the step of detecting the pattern of phosphorescence is performed photometrically

11. The method of any one of claims 1 through 9 wherein the step of detecting the pattern of phosphorescence is performed photographically.

12. The method of any one of claims 1 through 11 wherein the phosphorescent material is selected from the group consisting of phosphorescent inorganic pigment, phosphorescent organic pigment, phosphorescent organic dye and mixtures thereof.

13. The method of claim 12 wherein the phosphorescent inorganic pigment is an alkaline earth aluminate selected from the group consisting of strontium aluminate, calcium aluminate, barium aluminate, and a combination thereof; the alkaline earth aluminate being doped with a metallic element selected from the group consisting of europium, dysprosium, neodymium, holmium, and a combination thereof.

14. The method of any one of claims 1 through 13 wherein the step of depositing the phosphorescent material onto the solid substrate is performed by spraying or coating a liquid composition containing the phosphorescent material onto the solid substrate.

15. The method of any one of claims 1 through 13 wherein the step of depositing the phosphorescent material onto the solid substrate is performed by mixing the phosphorescent material with the solid substrate and spraying the liquid composition on the mixture.

16. A kit comprising a phosphorescent material emitting visible light in packaged form and instructional indicia for using the phosphorescent material to spatially characterize and optimize the mass distribution of a liquid deposited onto a solid substrate according to the method of any one of claims 1 through 15.

## Patentansprüche

1. Verfahren zum räumlichen Charakterisieren der Massenverteilung einer auf einem festen Substrat abgelagerten Flüssigkeit oder von Komponenten innerhalb eines Gemisches von partikulären Materialien, wobei das Verfahren die Schritte umfasst:
Ablagern auf ein festes Substrat eines phosphoreszierenden Materials in Gegenwart von oder vermischt mit einer flüssigen Zusammensetzung, wobei das phosphoreszierende Material sichtbare Strahlung emittiert und eine Nachleuchtzeitspanne von mindestens einer Minute aufweist,
Belichten des phosphoreszierenden Materials mit Strahlung einer Wellenlänge, die zum Fotoanregen des phosphoreszierenden Materials geeignet ist, für eine Zeitspanne, die ausreicht, um das Material mit einer ausreichenden Strahlungsenergie zu versehen, um dem Material zu ermöglichen, sichtbares Licht für mindestens etwa eine Minute, nachdem die belichtende Strahlung gelöscht wurde, zu emittieren, und
Nachweisen eines Musters von sichtbarer Phosphoreszenz auf der Oberfläche des festen Substrats und Charakterisieren des Flüssigkeitsdeckungsmusters davon.

2. Verfahren nach Anspruch 1, wobei die Massenverteilung der auf dem festen Substrat abgelagerten Flüssigkeit durch weiteren Einschluss der Schritte optimiert ist:
Abstimmen der Ablagerungsbedingungen, wenn das Phosphoreszenzmuster auf der Oberfläche des festen Substrats anzeigt, dass das Deckungsmuster von einem vorbestimmten Zieldeckungsmuster abweicht, und
Wiederholen der Ablagerungs-, Belichtungs-, Nachweis- und Abstimmungsschritte auf einem neuen Substrat, bis das nachgewiesene und charakterisierte Flüssigkeitsdeckungsmuster innerhalb vorher definierter Toleranz-Spezifikationen bezüglich des Zielflüssigkeitsdeckungsmusters liegt.

3. Verfahren nach Anspruch 1, wobei das feste Substrat ein Gemisch von partikulären Materialien umfasst, die mindestens ein partikuläres Material umfassen, worauf das phosphoreszierende Material abgelagert ist, um eine mit einem Leuchtstoff markierte Komponente bereitzustellen, die mit mindestens einem weiteren partikulären Material gemischt ist, wobei die Massenverteilung von mit einem Leuchtstoff markiertem partikulärem Material innerhalb des Gemisches anhand des nachgewiesenen Phosphoreszenzmusters charakterisiert wird.

4. Verfahren nach einem der Ansprüche 1 bis 3, wobei die flüssige Zusammensetzung ein Latexpolymer umfasst.

5. Verfahren nach Anspruch 4, wobei das Latexpolymer ein Styrol-Butadien-Latexpolymer ist.

6. Verfahren nach einem der Ansprüche 1 bis 5, wobei die flüssige Zusammensetzung ein Verfahrensadditiv umfasst, ausgewählt aus der Gruppe bestehend aus einem flüssigen Bindemittel, einem flüssigen Biozid, einem Flockungsmittel oder Koagulanz, einer Sammel- oder Flotationshilfe, einem Reagenz zur Herstellung eines auf Kohle basierenden Kraftstoffs, einer Zellstoff- und Papierverarbeitungschemikalie, einem Metallproduktions- und -verarbeitungsadditiv, einem Staubbekämpfungsmittel, einem Entwässerungsmittel, einem Frostschutzmittel, einem Versiegler, einem Lack, einem Rostschutzmittel, einem Klebstoff, einem Bindemittel für Gips und einer Kombination davon.

7. Verfahren nach einem der Ansprüche 1 bis 6, wobei das feste Substrat ein Material ist, ausgewählt aus der Gruppe bestehend aus Kohle, Ton, Mineralerzen, Papierzellstoff, Gips, Metall, Zellulose und Teppich.

8. Verfahren nach einem der Ansprüche 1, 2 und 4 bis 7, wobei der Schritt eines Nachweisens des Phosphoreszenzmusters während des Schritts einer Ablagerung des phosphoreszierenden Materials auf das feste Substrat erfolgt.

9. Verfahren nach einem der Ansprüche 1 bis 8, wobei der Schritt eines Nachweisens des Phosphoreszenzmusters durch visuelles Untersuchen der Oberfläche des festen Substrats erfolgt oder quantitativ erfolgt.

10. Verfahren nach einem der Ansprüche 1 bis 9, wobei der Schritt eines Nachweisens des Phosphoreszenzmusters fotometrisch erfolgt.

11. Verfahren nach einem der Ansprüche 1 bis 9, wobei der Schritt eines Nachweisens des Phosphoreszenzmusters fotographisch erfolgt.

12. Verfahren nach einem der Ansprüche 1 bis 11, wobei das phosphoreszierende Material ausgewählt ist aus der Gruppe bestehend aus einem phosphoreszierenden anorganischen Pigment, einem phosphoreszierenden organischen Pigment, einem phosphoreszierenden organischen Farbstoff und Gemischen davon.

13. Verfahren nach Anspruch 12, wobei das phosphoreszierende anorganische Pigment ein Erdalkalialuminat ist, ausgewählt aus der Gruppe bestehend aus Strontiumaluminat, Calciumaluminat, Bariumaluminat und einer Kombination davon, wobei das Erdalkalialuminat mit einem metallischen Element, ausgewählt aus der Gruppe bestehend aus Europium, Dysprosium, Neodym, Holmium und einer Kombination davon, dotiert ist.

14. Verfahren nach einem der Ansprüche 1 bis 13, wobei der Schritt eines Ablagerns des phosphoreszierenden Materials auf das feste Substrat durch Sprühen oder Beschichten einer flüssigen Zusammensetzung, die das phosphoreszierende Material enthält, auf das feste Substrat erfolgt.

15. Verfahren nach einem der Ansprüche 1 bis 13, wobei der Schritt eines Ablagerns des phosphoreszierenden Materials auf das feste Substrat durch Mischen des phosphoreszierenden Materials mit dem festen Substrat und Sprühen der flüssigen Zusammensetzung auf das Gemisch erfolgt.

16. Kit, umfassend ein phosphoreszierendes Material, das sichtbare Strahlung emittiert, in verpackter Form und Instruktionshinweise zum Verwenden des phosphoreszierenden Materials zur räumlichen Charakterisierung und Optimierung der Massenverteilung einer auf einem festen Substrat abgelagerten Flüssigkeit gemäß dem Verfahren nach einem der Ansprüche 1 bis 15.

## Revendications

1. Procédé pour la caractérisation spatiale de la répartition de masse d'un liquide déposé sur un substrat solide, ou de composants dans un mélange de matières en particules, le procédé comprenant les étapes de:
dépôt sur un substrat solide d'une matière phosphorescente en présence de, ou en mélange avec, une composition liquide, la matière phosphorescente émettant de la lumière visible et ayant une période de postluminescence d'au moins une minute;
exposition de la matière phosphorescente à une lumière ayant une longueur d'onde appropriée pour la photo-excitation de la matière phosphorescente pendant une période de temps suffisante pour charger la matière avec suffisamment d'énergie lumineuse pour permettre à la matière d'émettre de la lumière visible pendant au moins environ une minute après l'extinction de la lumière d'exposition; et
détection d'un motif de phosphorescence visible sur la surface du substrat solide et à partir de cela caractérisation du motif de couverture du liquide.

2. Procédé selon la revendication 1, dans lequel la répartition de masse du liquide déposé sur le substrat solide est optimisée par l'inclusion des étapes supplémentaires de:
ajustement des conditions de dépôt lorsque le motif de phosphorescence sur la surface du substrat solide indique que le motif de couverture s'écarte d'un motif de couverture cible présélectionné; et
répétition des étapes de dépôt, d'exposition, de détection, et d'ajustement sur un substrat frais jusqu'à ce que le motif de couverture de liquide détecté et **caractérisé** soit dans des spécifications de tolérance prédéfinies par rapport au motif de couverture de liquide cible.

3. Procédé selon la revendication 1, dans lequel le substrat solide comprend un mélange de matières en particules comprenant au moins une matière en particules ayant la matière phosphorescente déposée sur elle procurer un composant marqué au phosphore en mélange avec au moins une autre matière en particules, tandis que la répartition de masse de la matière en particules marquée au phosphore dans le mélange est **caractérisée** à partir du motif détecté de phosphorescence.

4. Procédé selon l'une quelconque des revendications 1 à 3, dans lequel la composition liquide comprend un polymère de type latex.

5. Procédé selon la revendication 4, dans lequel le polymère de type latex est un polymère de type latex de styrène-butadiène.

6. Procédé selon l'une quelconque des revendications 1 à 5, dans lequel la composition liquide comprend un additif de traitement choisi dans le groupe consistant en un liant liquide, un biocide liquide, un agent floculant ou coagulant, un adjuvant de recueil ou de flottation; un réactif pour la préparation de combustible à base de charbon, un agent chimique de traitement de pâte et de papier, un additif pour la production et le traitement des métaux, un agent de retenue des poussières, un agent de déshumidification, un agent anti-gel, un agent d'étanchéification, un vernis, un agent pour traitement anti-rouille, un adhésif, un liant pour le gypse, et une combinaison de ceux-ci.

7. Procédé selon l'une quelconque des revendications 1 à 6, dans lequel le substrat solide est une matière choisie dans le groupe consistant en charbon, argile, minéraux métallifères, pâte à papier, gypse, métal, cellulose, et tapis.

8. Procédé selon l'une quelconque des revendications 1, 2 et 4 à 7, dans lequel l'étape de détection du motif de phosphorescence est mise en oeuvre pendant l'étape de dépôt de la matière phosphorescente sur le substrat solide.

9. Procédé selon l'une quelconque des revendications 1 à 8, dans lequel l'étape de détection du motif de phosphorescence est mise en oeuvre par inspection visuelle de la surface du substrat solide ou est effectuée quantitativement.

10. Procédé selon l'une quelconque des revendications 1 à 9, dans lequel l'étape de détection du motif de phosphorescence est effectuée par photométrie.

11. Procédé selon l'une quelconque des revendications 1 à 9, dans lequel l'étape de détection du motif de phosphorescence est effectuée par photographie.

12. Procédé selon l'une quelconque des revendications 1 à 11, dans lequel la matière phosphorescente est choisie dans le groupe consistant en pigment inorganique phosphorescent, pigment organique phosphorescent, colorant organique phosphorescent et leurs mélanges.

13. Procédé selon la revendication 12, dans lequel le pigment inorganique phosphorescent est un aluminate alcalino-terreux choisi dans le groupe consistant en aluminate de strontium, aluminate de calcium, aluminate de baryum, et une combinaison de ceux-ci; l'aluminate alcalino-terreux étant dopé avec un élément métallique choisi dans le groupe consistant en europium, dysprosium, néodyme, holmuim, et une combinaison de ceux-ci.

14. Procédé selon l'une quelconque des revendications 1 à 13, dans lequel l'étape de dépôt de la matière phosphorescente sur le substrat solide est effectuée par pulvérisation ou application d'une composition liquide contenant la matière phosphorescente sur le substrat solide.

15. Procédé selon l'une quelconque des revendications 1 à 13, dans lequel l'étape de dépôt de la matière phosphorescente sur le substrat solide est effectuée par mélange de la matière phosphorescente avec le substrat solide et pulvérisation de la composition liquide sur le mélange.

16. Kit comprenant une matière phosphorescente émettant de la lumière visible sous forme emballée et des indications donnant des instructions pour l'utilisation de la matière phosphorescente pour la caractérisation spatiale et l'optimisation de la répartition de masse d'un liquide déposé sur un substrat solide, conformément au procédé selon l'une quelconque des revendications 1 à 15.
